# EUROPEAN PATENT APPLICATION

(11) **EP 1 731 796 A2**
(43) Date of publication of application: **13.12.2006**
(21) Application number: 06386015.9
(22) Date of filing: 06.06.2006
(51) Int. Cl.: F16H 15/38

(54) **Automatic continuous variable transmission box of infinity speed ratio, equipped with hydraulic, electro hydraulic, or electromagnetic clutch**

(30) Priority: 06.06.2005 GR 2005100276
(71) Applicant: Mastrokalos, Antonios, 84003 Sifnos (GR)
(72) Inventor: Mastrokalos, Antonios, 84003 Sifnos (GR)
(74) Representative: Vourou, Triantafillia

(57) **Abstract**

Automatic continuous variable transmission box, of infinity speed ratio, equipped with hydraulic, electro hydraulic, or electromagnetic clutch, where the shafts of primary (27) and secondary (26) are disks with circumpherential semi circular groove between them which have the shape of donuts in one case and in the other the shafts shape between them peripheral semi - circle groove they are separated in single or double or parallel gradation and the intermediary disk between the primary (27) and secondary (26) is a special overrunning clutch (33,53,52), of which the exterior ring is divided in various forms depending each time on the special needs of each arrangement of gearbox, it can also be flexible rubber of tires. Also the clutch of the box is a special overrunning clutch (54) with a form that depends on its radial or axial deviation of clutching or declutching balls and the way of activation - deactivation of this is hydraulic pressure or electromagnet.

## Description

This invention regards automatic gear-boxes of continuous variable transmission speed of infinity ratio, which are used in applications with the requirement of control either to maintain constant output speed, when the input is non constant or variable, or rapid change of output speed irrespectively of the input revolutions, even if these are constant, or in systems of acceleration and/or of deceleration. Such applications are power production sets from renewable or passive sources of energy, motion of motor cars, motorcycles, machine-tools, air compressors, air-conditioning compressors systems, pulley blocks and elsewhere.

Until today the automatic gear-boxes of infinite ratio perform what they have been designed to do, either transmission by means of chains or belts, or by axes equipped with various types of conical or toroidal discs, only for low torque and power, with large size slip as compensation.

This invention regards automatic gear-boxes of continuous variable transmission speed with zero slip, which with the appropriate manufacturing materials and the corresponding size, serves also corresponding moments and sizes of force due to the use of a new type of overrunning clutch. Thus, we have a transmission of rotation with a small size component, based on the principle of clutch operation, but as it is revealed later, the characteristics of operation become as those of couplings, providing the ability to regulate revolutions at a wide range. They also provide the possibility, except the small adjustments of speed, of the adjustment of revolution to be executed without the need of handling or clutching-declutching of the revolution transmission system via a clutch, as it happens with the conventional motion systems. The unit itself is autonomous and capable to carry out all the essential adjustments.

Apart from their advantages of the continuous transmission of revolutions, without slip, without need of handling coupling-decoupling, they also offer safety of the unit and the entire group of energy-motion production, against unanticipated or violent fluctuations of loads or resistances.

Specifically the vehicles at the phase of emergency or sudden braking, and because of the simplification of the unit and the flexible intervention of the overrunning clutch, which becomes flexible only when it is required by executing and serving their purpose. The present invention is offered in many forms of arrangements serving the special needs of every mechanical device of rotational-motion transmission.

According to the invention the operation of automatic boxes of continuous variable transmission of infinity speed ratio, is based on the operation principle of special overrunning clutches which with the specificity of their manufacture they ensure the clutching-declutching of various or different diametrical points of two different disks, which belong or serve parts of a single system of motion transmission, achieving maintenance of a constant number revolutions, or adjustment at the desirable number of revolutions within limits. The innovation of the manufacture lies firstly in the specificity of the manufacture of the peripheral ring or part of the overrunning clutch, which constitutes the intermediary shaft-coupling, between incoming and outgoing disks and it is a divided type in two half rings. Inside of these two half rings there are balls pushed out or compressed undergoing radial, axial and angular deviation due to the action of rotary tension and due to the centrifugal force and the action of the springs or even hydraulic pressure, or even tension caused from electromagnetism (for optional additional control), the balls after they achieve the forced lateral deviation of the two half rings, in sectors of circumference of the circle of smaller radius, enforcing or ensuring coupling.

Two annular parts with their axial deviation, in relation to their axis of rotation, extended or slipping at both sides provide to the overrunning clutch the ability to follow and slur over or to deal with a big range of accidental damage, gaps, or malformations or imperfections of the operating parts that might be caused by long use, abrupt fluctuations of loads by minimizing or zeroing the slip. Secondly the same principle of manufacture of the overrunning clutch, (intermediary disk) also governs the disks or drums of the involved shafts and specifically the incoming, providing additional guarantee of zero slip, eliminating accidental axial gaps.

Thus the principle of operation is that of clutches, but the characteristics are rendered as those of contacts, ensuring the desirable clutching, without slip. A small slip might occur only at the starting phase and while the angular deviation from the phase of declutching-clutching lasts and no more. As a simple pair it provides a possibility of maximum ratio of transmission without taking into consideration other planetary or epicycle systems that might introduce revolutions +/- 4,62/1. If the pair is double and in line the ratio is doubled, and so on. When the use of incoming overrunning clutch is activated by hydraulic assistance or electromagnetic command or signal, we have the possibility also of perfect clutching or declutching, not having the need of other type of clutch.

For large sizes of gear-boxes, all the parts, except of the small ones will be manufactured divided, for easy access, inspection and replacement and the bearings will be of the self aligned type.

Direct application and use:
First, where a constant output of revolutions is required, irrespective of fluctuations of the input revolutions, with fast response of correction or recovery. As in the systems of alternative sources of energy, (wind generators, wave generators), in take off power systems such as generators coupled in big vessel engines with variable revolutions, in pumps as well as in compressors where the linear output of revolutions is intended.
Secondly, if we wish easy and fast alteration of speed independently of the input speed as in ships' propellers, in cars, motorcycles with double pair. Also to deal with the delay of response, particularly in cases of acceleration of revolutions because of the inertia of the turbochargers in the change of loads, which move with the flow of the exhaust gases of internal combustion engines (TURBO LAG), giving acceleration of overshooting or by-passing the problem. Here the speed transmission box will be located at the extension of the shaft axis and depending on the side that is convenient with flexible output via overrunning clutch. Thus if for whatever reason or parameter the need arises, then with the action of a strobe, the system intervenes, which in idle state accelerates the output speed against those of compressor to deal with the instantaneous tendency of deceleration that will occur at clutching providing thus essential solutions of regulation, minimizing the risk of blocking.

Another important use, in the internal combustion engines with direct mechanic coupling of scavenge air compressors with the system, depending on the parameters and control of operation all necessary solutions are provided regarding the provision of air and quantity of air. An additional capability is the use of the invention in the operation of compressors (air compressors or gases used in air-conditioning compressors) because the possibility of starting with small or zero load is provided and thus many problems are avoided or damages caused at the starting of these high speed machines or their use can replace or compare to that electric motors of variable speed (INVERTER) there is also in this case a limit which does not exist in the described arrangement.

Besides the main form and connections, there is also the capability of motion reception from the circumference of any intermediary disk, via gears or similar systems, with angular arrangement of mounting or coupling. As well as depending on the aims or the anticipated arrangement, there exists the possibility of intervention not only in the entry or outlet, but also in the intermediary drum between the primary and secondary one, the placement of hydraulic or electromagnetic overrunning stopper to achieve various aims.

Another variant of the system is the possibility of the first intermediary overrunning clutch (if the system is double, or simply the intermediary overrunning) to turn over the angles of clutching, with result the declutching-immobilization with the disadvantage of the more powerful, hence of greater volume construction of control of this overrunning clutch, and the decreased ratio (plus or minus), with the advantage of omitting the hydraulic or electromagnetic overrunning clutch and the results of its control.

Also, if in large sizes and particularly in points on the disks at a long radial distance from the center of the rotation axis a big arrow of bending is observed and is specifically not covered with the above mentioned arrangement, then in order to deal with it, it is possible to place in between an additional axial mechanical overrunning clutch.

To cover completely all resulting needs of the special constructions the arrangements below are used as follows:
More characteristics of the invention and the advantages that emanate from it are characteristically described with the help of attached figures.

Figure 1 shows a side view of the overrunning clutch of mechanic activation. The twin rings, the ball bearings and lateral disk plates-frames of constitution can be distinguished.

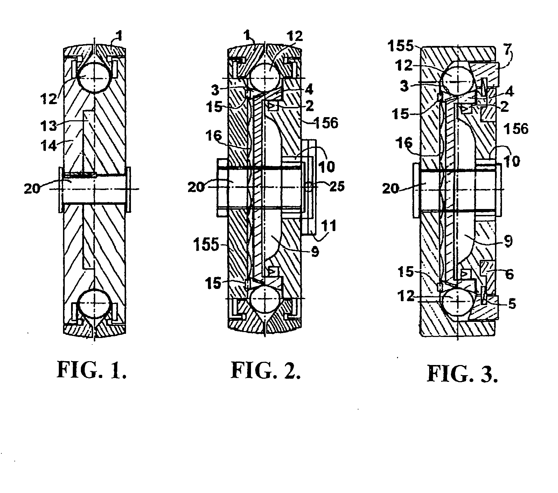

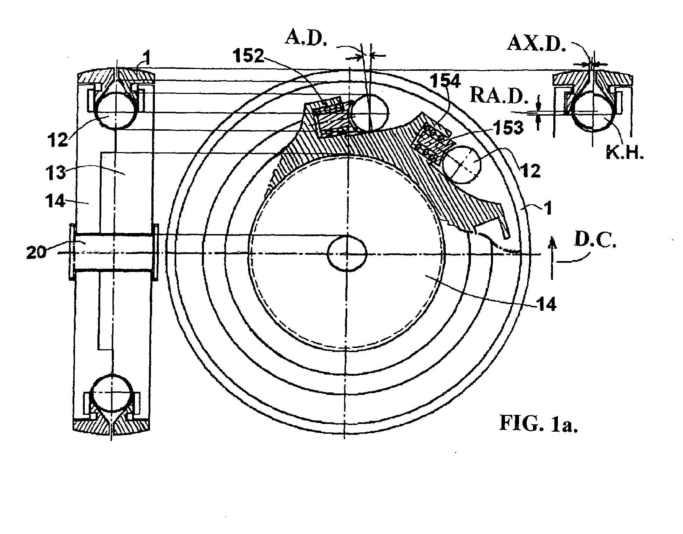

Figure 2 portrays a side view of overrunning clutch of hydraulic activation. The divided twin rings can be distinguished. The synthetic oil seal of U shape, the special ring with the cuneiform shaped ways for the motion of the balls and the protruding keys or drivers cuneiforms, inside which the frustum cone shaped piston slips. Also the hydraulic cylinder and oil supplier channel are presented. Also the disk plates-frames for oil supplying the ball bearings, the key of withholding the special ring, the bevelled type spring of reinstatement in inactive position or position of declutching of the piston are shown.
Figure 3 presents a side view of an overrunning clutch, with the same principle of operation as this of figure 2, but here instead of two twin rings we have one of axial action.
Figure 4 presents a side view of an overrunning clutch, with the same principle of operation, as this of figure 3, with one ring also, but of radial-axial action.
Figure 5 presents in side view an overrunning clutch of mechanical activation as that of figure 1 but with the special rings that peripherally surround the whole arrangement, with curved surfaces so that both sides contact with radial-axial action on the surfaces of clutching, the ring of decentralization of the balls is shown, the ring of withholding and control of rings of axial action as well as the special rings of clutching.
Figure 1 a presents the front view of the overrunning clutch and an analysis of the way of deviation from rest or idle in clutching condition.

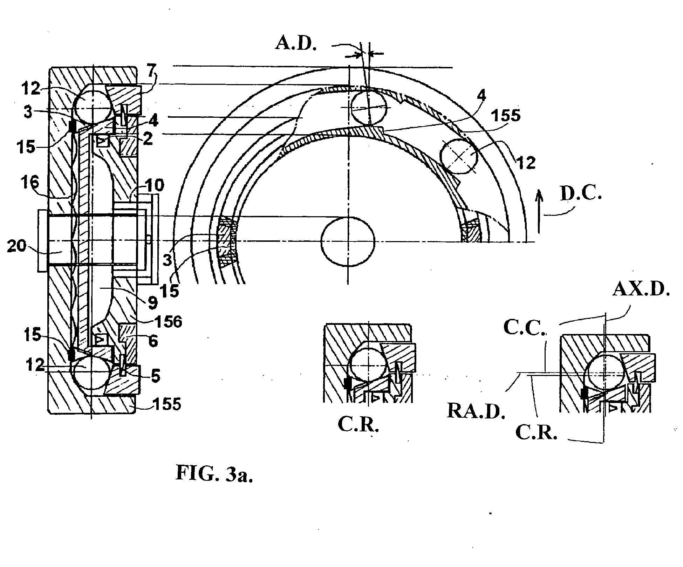

Figure 3a presents the overrunning clutch of figure 3 in front view and analysis of way of deviation from idle condition to clutch condition.

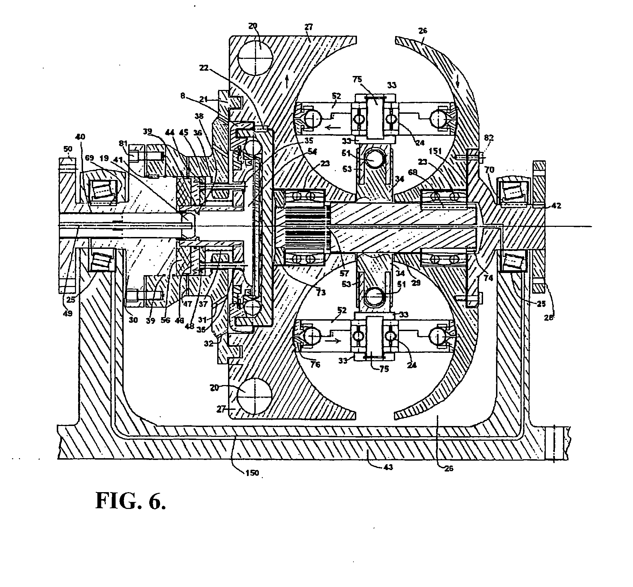

Figure 6 presents an automatic box of continuous variable transmission of infinity speed ratio, of simple gradation that is to say a primary disk with groove of cycloid form, one overrunning clutch which undertakes the role of intermediary disk which keeps in absolute contact the, primary disk with that of the same shape of the secondary and it is of "donut" shape. The valve of mechanic control for the supply or interruption of oil under pressure for the activation or otherwise of the special hydraulic overrunning clutch, with all the attached servomechanisms to serve this purpose which with its activation or deactivation sets in motion or stops the whole system. Also the bars in connection with fork links that undertake the guidance and placement in the desirable places of the relation of intermediary disks of overrunning clutch are shown. Also the area is shown within which the vibrations absorber can optionally be placed, also the connection flanges of load input and/or output can be seen.

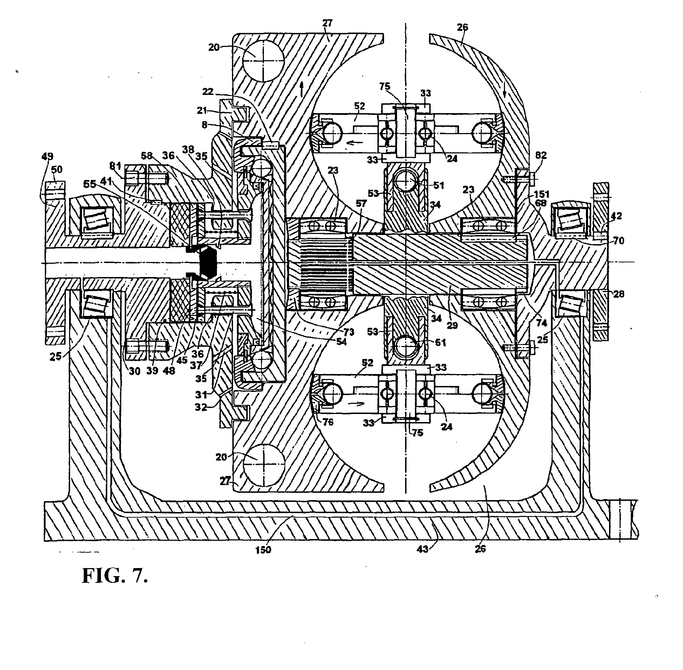

Figure 7 presents another automatic gear-box of simple gradation and it constitutes a variant of the arrangement of figure 6. The basic difference here is the way of handling of the valve of oil supply for the control of the unit, which is done via an electromagnetic valve.

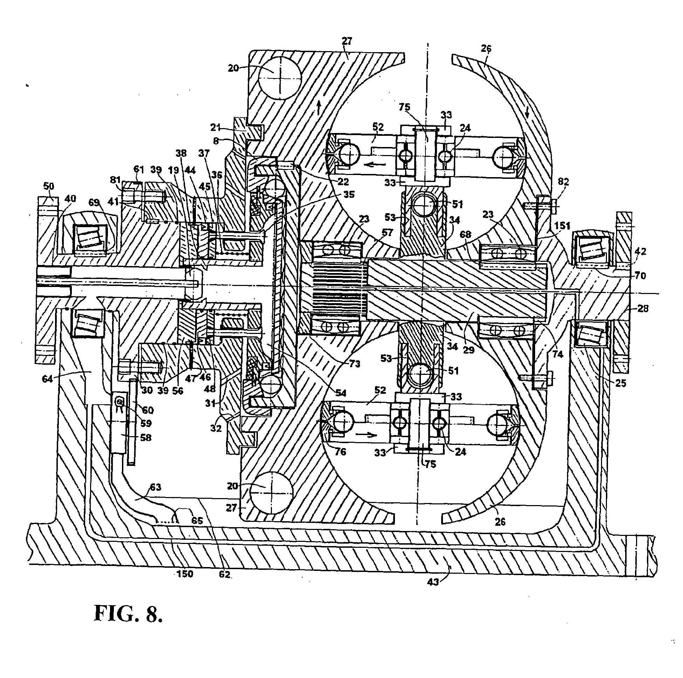

Figure 8 also presents another arrangement of automatic gear-box of simple gradation, similar to the previous ones, with the difference that this unit has its own pump for its lubrication and for the activation or not of the hydraulic clutch of the stopper of motion.

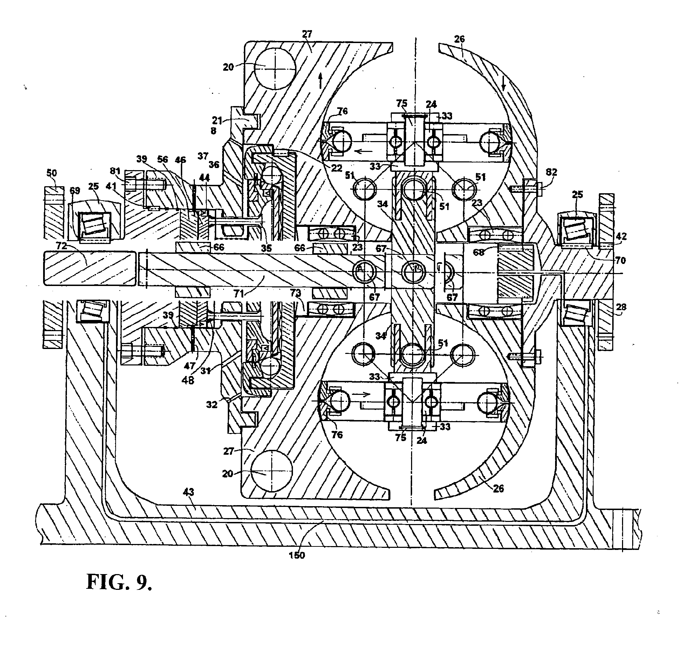

Figure 9 presents one of the above mentioned systems of automatic gear-box, in side view with its bars of control.

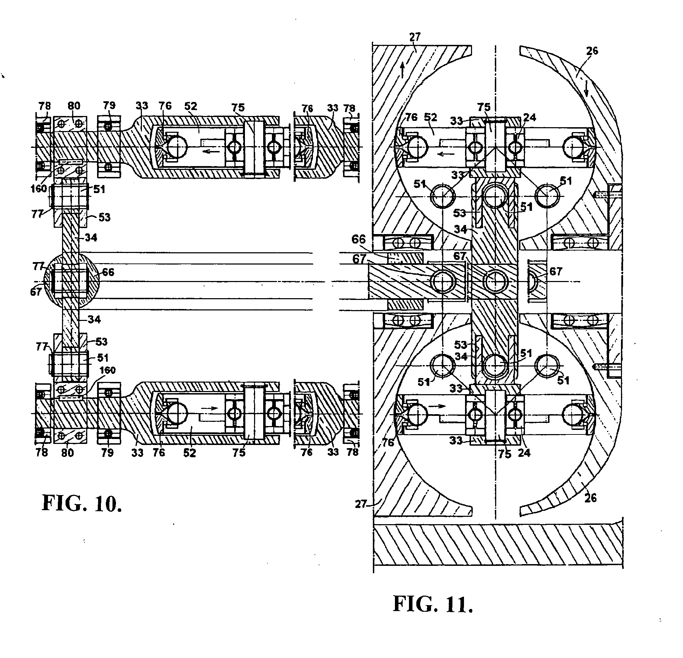

Figure 10 presents the control bars of the unit from the front, here the mechanisms of turning or angular change of the intermediary overrunning clutch disks appear from another view.
Figure 11 presents partially figure 9 in relation with those of figure 10 where the bars of control of intermediary overrunning clutch disks are shown.

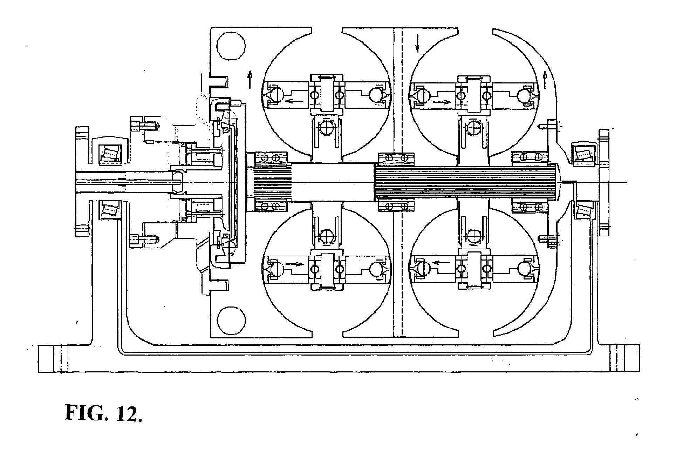

Figure 12 presents an automatic gear-box of double gradation, in side view with a mechanic valve of oil control for activation-deactivation of the unit. Its items are arranged in line as follows: hydraulic overrunning clutch, primary disk of reception of revolutions, first pair of intermediary overrunning clutches, intermediary disk of divided type, (two items) for the reception and transmission of revolutions in the second pair of overrunning clutch of receipt of revolutions from the intermediary to the final. The way of control of the hydraulic overrunning clutch is mechanical.

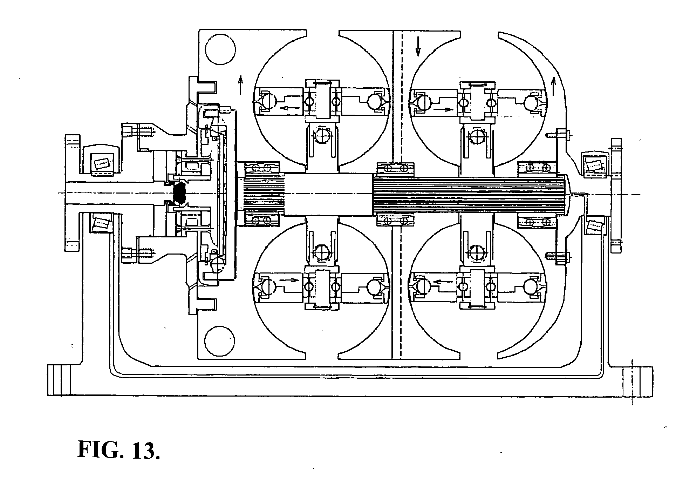

Figure 13 shows in side view an automatic gear-box of double gradation, where the way of control of the hydraulic overrunning clutch, is that of electromagnetic valve.

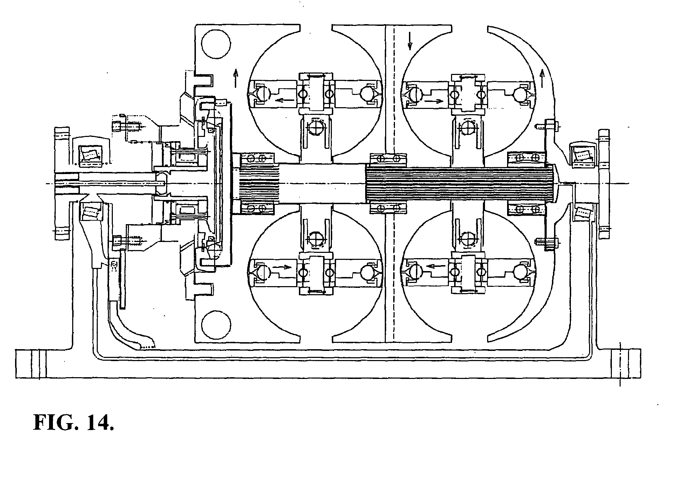

Figure 14 shows an automatic gear-box of double gradation, where the unit is equipped with its own pump for oil control pressure production.

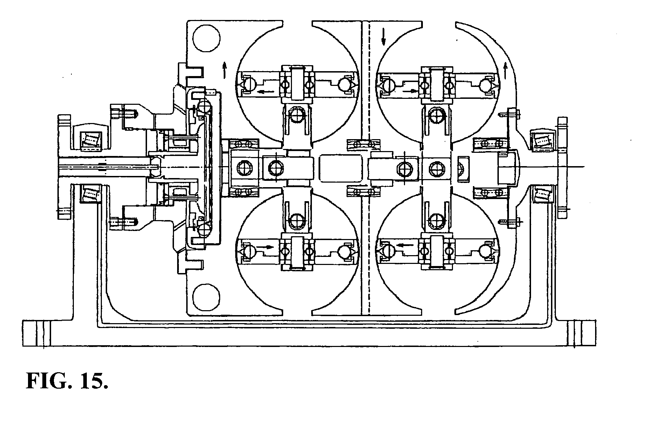

Figure 15 presents in side view the arrangement of the bars of control of intermediary overrunning clutch disks, in the automatic gear-boxes of double gradation.

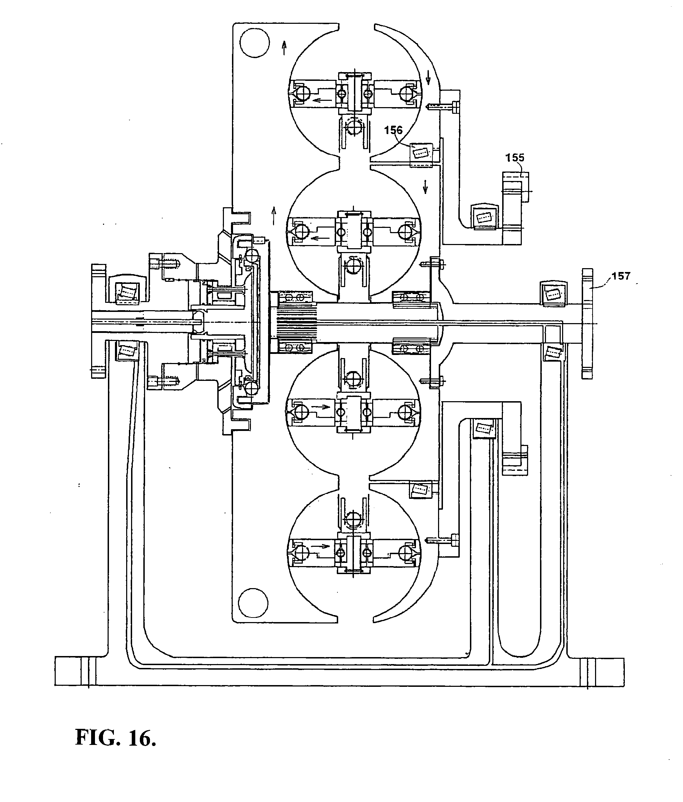

Figure 16 presents an automatic gear-box in another way of arrangement of the involved departments described before. Here we have a common input and different inputs of control revolutions, where the way of control of the hydraulic overrunning clutch is the mechanic valve.

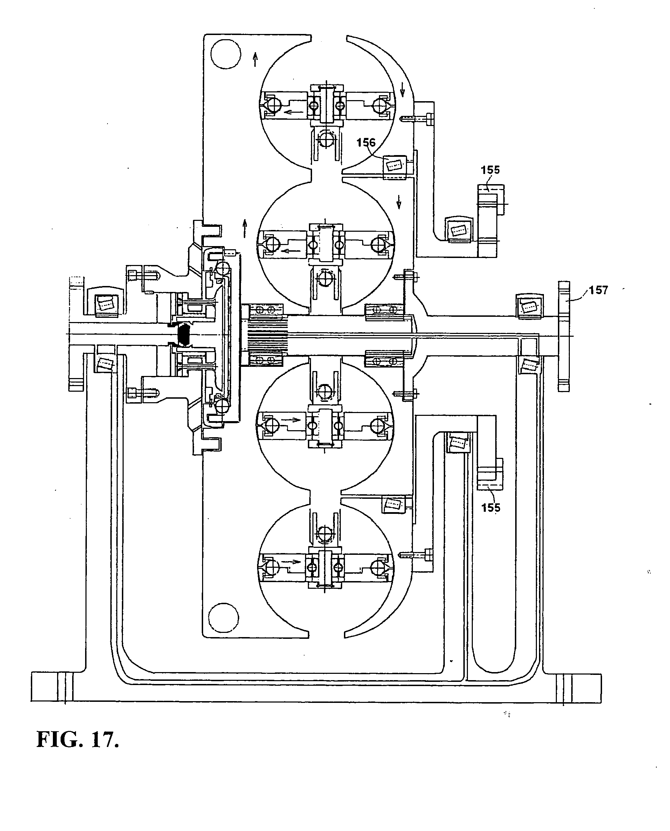

Figure 17 presents an automatic gear-box of the same arrangement and capabilities as that of figure 16, with the difference that the hydraulic overrunning clutch is controlled with electromagnetic valve.

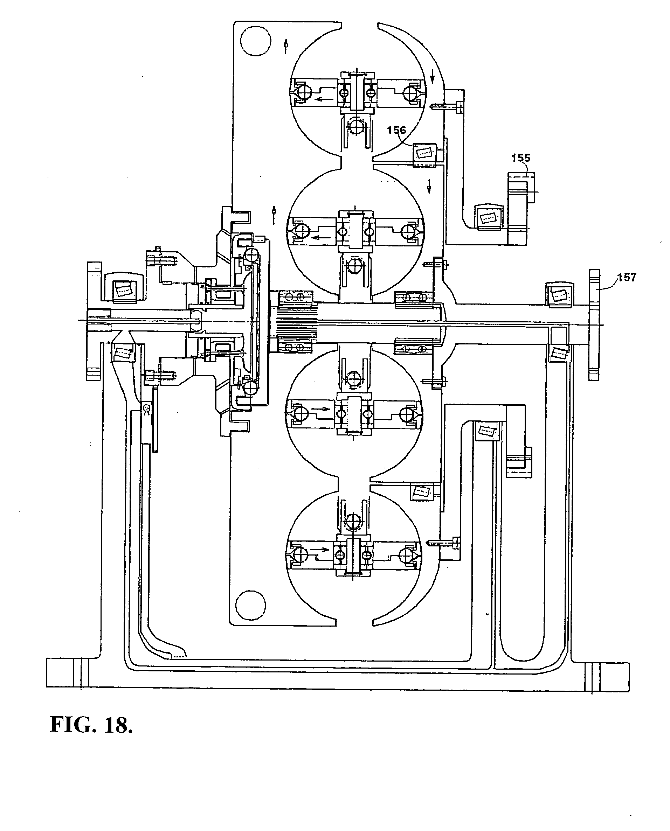

Figure 18 redisplays an automatic gear-box of simple gradation with two different points of output of controllable revolutions which is equipped with its own pump for the creation of pressure for lubrication and control of activation or deactivation of the hydraulic overrunning clutch.

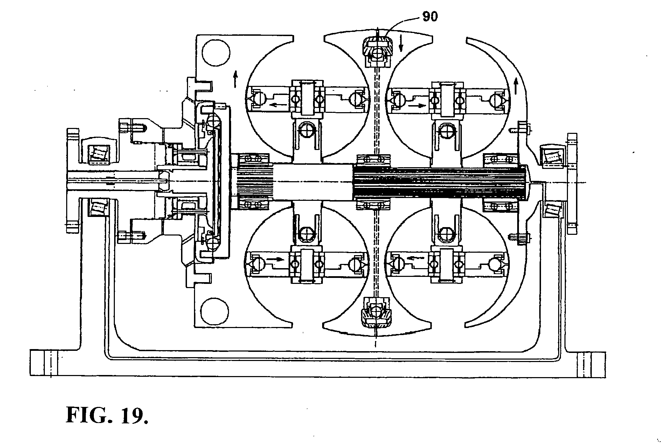

Figure 19 presents an automatic box of continuous variable transmission speed of infinity ratio of double gradation and mechanic valve for the control of the hydraulic overrunning clutch, where one more overrunning clutch in the intermediary disk is placed, which neutralizes of each axial tolerance that might appear in units of large size, because of the bending arrow.

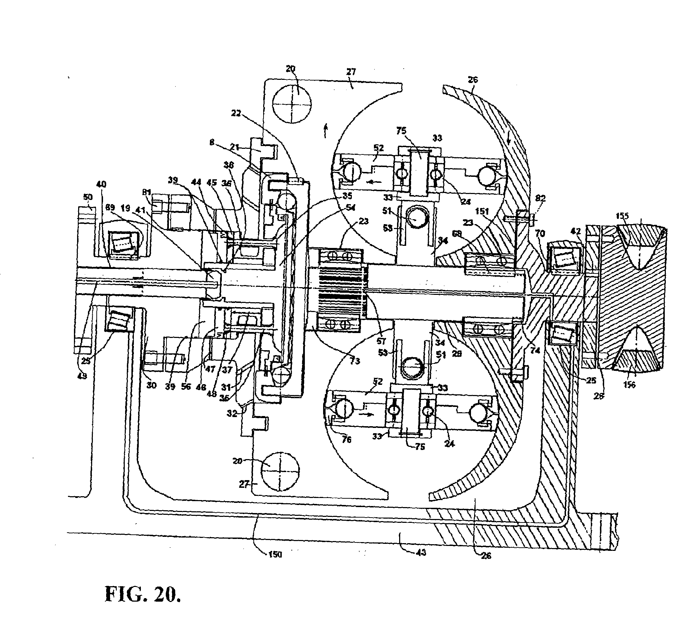

Figure 20 presents in side view an automatic box of continuous variable transmission speed of infinity ratio, simple gradation and of mechanic control of hydraulic overrunning clutch, where the output is received from a belt, it can also be received with a chain.

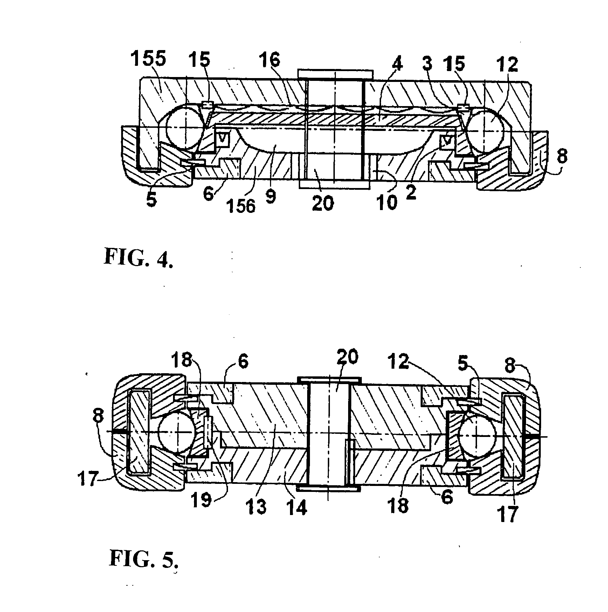

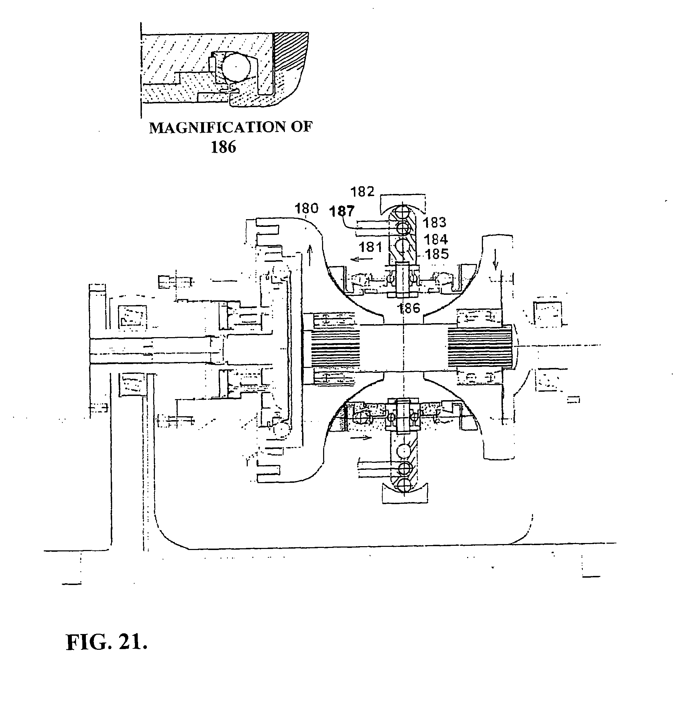

Figure 21 presents another possibility for an automatic box continuous variable transmission of infinity ratio simple gradation and of mechanical control of operation of the valve of hydraulic overrunning clutch, where here the primary and secondary disks constitute a concave frustum cone. Here to achieve and maintain a permanent contact of the intermediary overrunning clutch disk, which is a variation of this of figure 4, a resistance column driver has been placed for it the axis of which is located in a vertical position to the level of points of contact of overrunning clutch with the primary and secondary disks. Thus we have compaction of the involved parts in three object points located at the apexes of an isosceles or equilateral triangle. The particular figure or the arrangement serves spaces where there is a lack of sufficient breadth. The exits can be achieved, as in all the automatic gear-boxes of continuous variable transmission of infinity ratio, with axes, belts or chains.

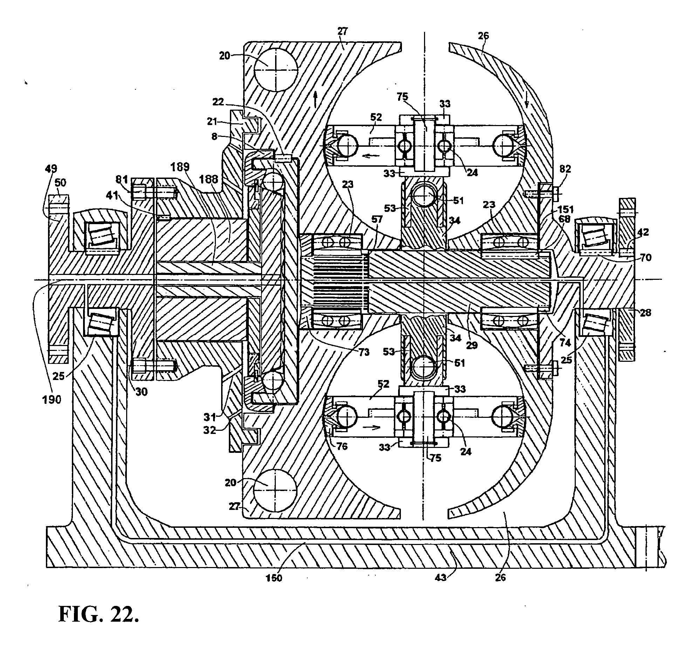

Figure 22 presents another arrangement of automatic gear-box of continuous variable transmission of infinity speed ratio, simple gradation with electromagnetic clutch. The advantage of this is that: it saves energy, which is used and consumed only when needed with minimized power and supply of the lubricating pump.

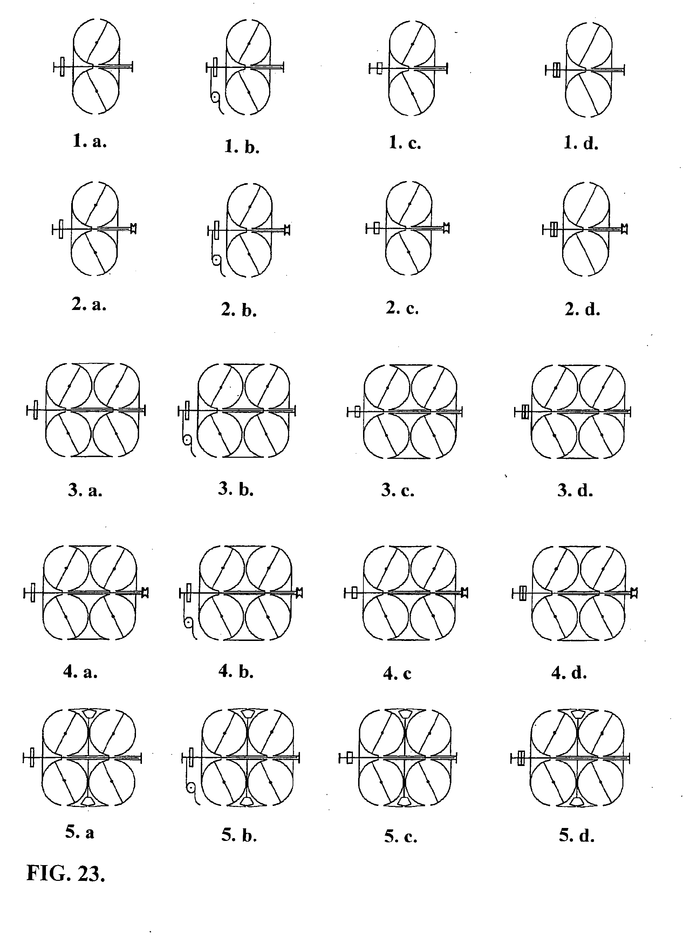

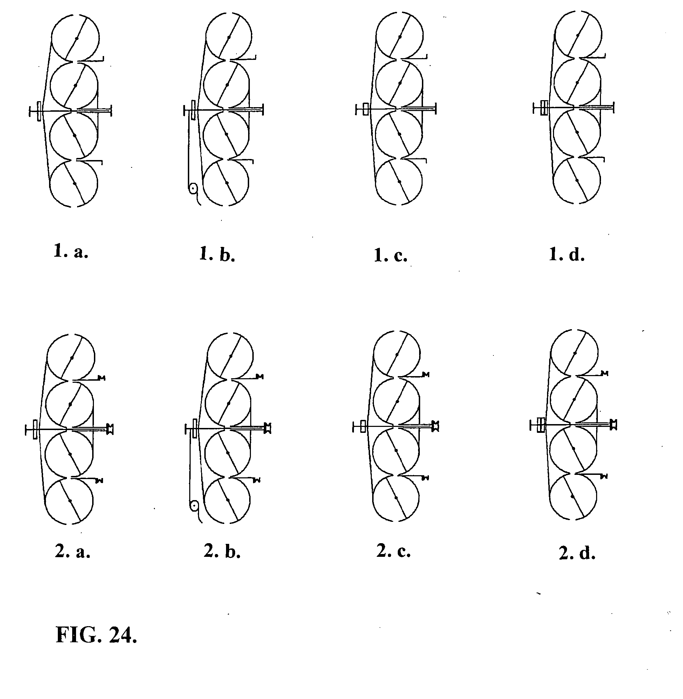

Figures 23 and 24 present 28 basic forms -however other combinations are not excluded- of arrangement of automatic gear-box of continuous variable transmission of infinity ratio, with hydraulic or electromagnetic overrunning clutch, the primary and secondary disk are of donut shape in monolinear figure.

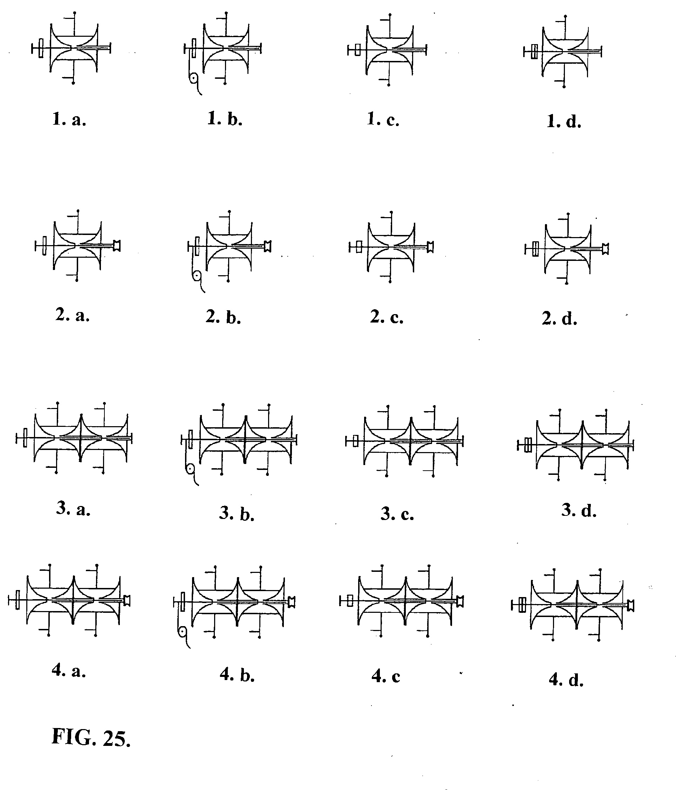

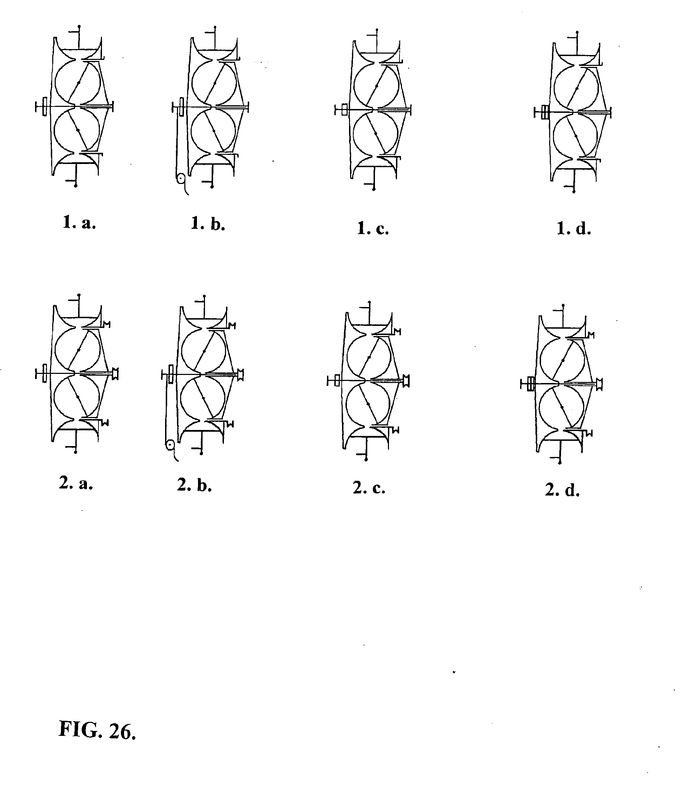

Figures 25 and 26 present 24 basic forms -however other combinations are not excluded- of arrangements of automatic gearbox of continuous variable transmission of infinity ratio, with hydraulic or electromagnetic overrunning clutch, the shape of primary and secondary disk is of a concave frustum cone, in monolinear figure.

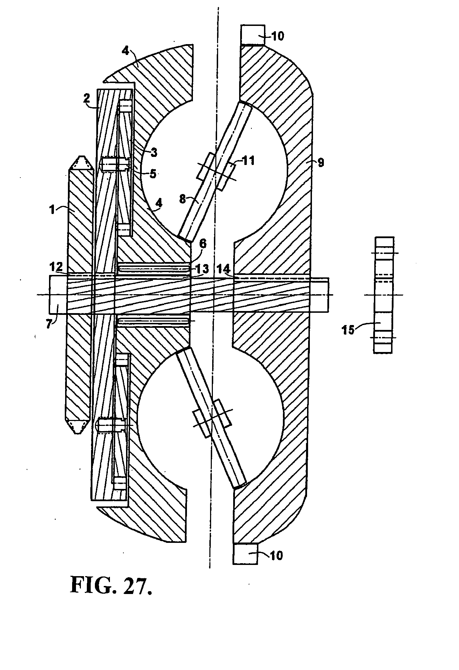

Figure 27 presents a simple arrangement of automatic gearbox of continuous variable transmission of infinity ratio, with planetary system of provision of motion via chain or shaft and output via a shaft or rachet gearing or overrunning clutch. This arrangement can be applied in wind generators, in bicycles and in motorcycles.

### Detailed description of figures.

### Figure 1

Side view of overrunning clutch of mechanic activation with divided twin rings (1), ball bearings (12), side lateral disk plates-frames of constitution (13, 14), pin of fixing or turning (20).

### Figure 2

Side view of overrunning clutch of hydraulic activation with divided twin rings (1), synthetic oil seal of U shape (2), special ring (3) with shaped cuneiforms of locomotion of balls and the protruding keys or drivers cuneiforms within which the frustum cone form piston slips (4), hydraulic cylinder (9), oil supply pipes (10), ball bearings (12), key of withholding (15) special ring (3), bevelled spring (16) for returning to position of declutching of the piston (4). Fixing or turning pin (20), disk plate oil supplier (11), mounting disk plates - frames (155), circular plate (156) of mounting and driving of piston (4).

### Figure 3

Side view of hydraulic overrunning clutch type of axial action, synthetic oil seal of U shape (2), special ring (3) with the formed cuneiforms of locomotion of balls and the protruding keys or drivers cuneiforms within which the frustum cone piston slips (4), conical spring to return the (5) ring of axial action (7), hydraulic cylinder (9), oil supply pipes (10), ball bearings (12), key (15) of the special ring (3), bevelled spring for the return of the piston in position of declutching (16) fixing or turning pin (20), mounting disk plates - frames (155), circular plate (156) of mounting and driving of piston (4).

### Figure 4

A side view of one overrunning clutch with the same principle of operation as this of figure 3. Here the synthetic oil seal of U shape (2) is shown the special ring (3) with the cuneiform drivers of locomotion of balls and the protruding keys or cuneiforms drivers inside which the frustum cone form piston slips (4), conical spring for the return of (5) the ring of axial action (8), withholding nut of the return spring (6) and ring of axial action (8) hydraulic cylinder (9), oil supply pipes (10), ball bearings (12), key for withholding the special ring (3), bevelled spring (16), fixing or turning pin (20) mounting disk plate - frames (155), disk plate of (156) mounting and driving of piston (4).

### Figure 5

Conical spring of return (5) of the axial action spring (8), withholding nut of (6) of the return spring (5) and of the axial action spring (8), ball bearings (12), mounting lateral cylindrical plates - frames (13, 14) fixing or turning pin (20), withholding ring (17) and guide of the rings of the axial action (8), ring of decentralization (18), key of withholding ring (19) of ring (18).

### Figure 1a

A partial section the mechanical overrunning clutch with in side view where (A.D.) it is the angular deviation of the balls from the clutching - declutching phase. (AX.D) axial deviation of the twin half rings in relation with their axis of rotation, during the phases of clutching - declutching. (RA.D.) radial deviation of balls inside of the cuneiform driver ring (13, 14) of the lateral disk plates-frames at the phases of clutching - declutching. (K.H.) balls seated on their driver in condition of idle or idle / declutching. (D.C.) direction in which if motion is given to the plates (13, 14) at their axis, that is to say, deviations and clutching are achieved. Reversely they are released.

### Figure 3a

Presents one hydraulic overrunning clutch where the deviations are ensured with the use of hydraulic pressure on the piston (4) which when sinks in its cylinder, decentralizes the balls and then pushes the balls concerning its axis of rotation the ring of axial action (7) achieving the clutching of disks which it is called to serve. (A.D.) Angular deviation of balls from clutching to declutching and reversely. (RA.D.) radial deviation of balls. (AX.D.) axial deviation of balls and ring, from one state to the other. (C.C.) centre of clutching of balls. (C.R.) centre of rest or idling of balls. (D.C.) direction in which if the axis of overrunning clutch is forced to turn with the parallel effect of hydraulic pressure clutching will be achieved.

### Figure 6

Figure 6 presents an automatic box of continuous variable transmission speed of infinity ratio, simple gradation, with (19) the disk sliding valve for the control of hydraulic type overrunning clutch externally controlled. That is to say, the disk sliding valve is checked externally with a system of arm links or other additional hydraulic systems and it (20) constitutes a flexible vibration absorber. (21) Is an adaptor coupling, equipped with ball bearings which allows or facilitates for various reasons the systolic or diastolic expansions or locomotion. (22) The key of holding of the overrunning clutch, on the primary (27). (23) is double self aligning ball bearings or roller bearings supporting the primary - intermediary and secondary disk. (24) They are joining ball bearings of intermediary overrunning clutch or disk. (25) They are roller bearings receivers of axial thrust forces. (26) It is secondary disk. (27) It is primary disk. (28) It is an outlet flange of the secondary. (29) It is intermediary shaft multi splint (57) from the one side input joint and adaptor of coupling of systole - diastole. (31) Apertures of control oil drain. (32) It is apertures of full drain of oil even from the most radially remote points. (33) They are fork legs for the support of the intermediary overrunning clutch disks (52). (34) it is a link - bar and control bar of ratio of motion transmission, via the change of angle or points of contact of the involved disks. (35) They are valves of decompression of the cylinder of the overrunning clutch, which receives the motion. (36) They are drivers of valves of decompression (35). (37) They are return springs of the decompression valves of (35). (38) it is the seat of the disk sliding valve, controlling the clutch (19). (39) are synthetic seal rings. (40) it is the rod driver of the disk sliding valve (19). (41) it is the shaft key of the entry coupling (30). (42) it is the shaft key of the outlet flange (28). (43) it is the casing or the body of the unit. (44) Is the synthetic seal ring of U form. (45) It is one disk valve carrier of the oil decompression valves. (46) It is a disk sliding valve of the clutching cylinder (56) of the input overrunning clutch of motion (54). (47) they are decompression apertures of the clutching cylinder (56). (48) withholding cotters of valves (35). (49) it is the oil control entry. (50) It is the input shaft flange. (51) Is the pin connector of the control links - bars (34) and of forks of the intermediary overrunning clutch (33,53,52). (52) are intermediary overrunning clutches which with the angular placement they acquire each time, ensure the desired revolutions. (53) It is legs of motion transfer from the pins (51) to the forks (33). (150) are oil supply branches. (8) It is a ring of axial action for the zeroing of slipping.

### Figure 7

Here the difference to the previous arrangement lies in the way of control of the disk sliding valve, of clutching - declutching of the overrunning clutch the rest are the same. Thus here (55) it is the disk sliding valve, which is activated via the adaptor (58) that also constitutes the piston at the electromagnetic. What is observed here is a decrease of dimensions and simplicity of construction.

### Figure 8

The difference here lies in that: the unit is equipped with its own oil pump to guarantee control pressure as for the rest it is similar with the arrangement which appears and explained in Figure 6. The casing or body shapes the oil sump to service the unit (43). The pump (58) sucks oil via the filter (65), and the supply line (64) and pipe branch (150), it provides the essential quantity for lubrication and control of the unit. It receives motion via gears (61 and 60) and the limit of safe running pressure is checked by the pressure regulator (59). (63) is suction pipe. (40) It is the gland packing of the disk sliding valve (38).

### Figure 9

What is shown here is the way of angle control of intermediary overrunning clutch disk, in the various angles, so that each time it connects points of different diameters, or of equal ones, for equal speed, depending on the intention. The new elements that appear here are the following: (72) a controller or angle positioner of the intermediaries (52). (66) is the bushing of the cylinder bar (71). (67) They are connection pins of the bar (71 and 34). The remaining elements are such as mentioned in previous figures.

### Figure 10

Here the remaining details of bars, or levers of control appear from the other aspect as explained in figure 9. (77) are cyrclips of pins (51). (78) are ball bearings of axial type thrusters, that are placed in the two sides of the mounting of the forks (33) of angle change of the intermediary overrunning clutches. The (80) are forks fixing brackets (33) and joining of these with the pins joints (51 and levers 34). (79) is simple ball bearing.

### Figure 11

The levers and bars in 90° in relation to their aspect in figure 10. Here also appear indicatively the placements of these in three different points, with distances between them 45° +/- from the medium position, or equal speed transmission. Their change of position can reach other angles even 45°. Therefore in this angular position one ring of the intermediary overrunning clutch contacts one shaft on one side and the other on other, reaching the biggest transmission ratio.

### Figure 12

Here the transmission ratio or gradation has been doubled, with the placement in line of a third disk. Thus the disk after the first intermediary overrunning clutch has a primary - secondary place and mission. This unit has clutch control, as that of the figure 6. That is to say the disk sliding valve is checked externally, with links - bars joining system or other additional hydraulic systems. The intermediary shaft has also been treated from both sides of the multisplint, so that if any conditions of slipping are created for any reason are dealt with immediately. The secondary disk is of two pieces. The control bars here are concentric, one inside the other, and their motion is independent. Thus depending on the control decision, they can move at the same or opposite direction, in order to achieve the speed control.

### Figure 13

Another variation of the previous arrangement, with electric, via electromagnetic, control of the disk sliding valve, for checking of clutching - declutching, of the overrunning clutch of the input motion.

The remaining elements are those of the arrangement of figure 12.

### Figure 14

Another double speed gradation in line, as of figure 12, with the same way of control, but self - reliant regarding the lubrication oil supply and control.

### Figure 15

Arrangement denoting the way and ability of control of a double speed gradation in line.

### Figure 16

It concerns other arrangements - facilitations of motion and control of speed. Suitable for cases of a problem of length, or where other torque parameters are desirable or the needs of gradation or ratio are larger, or peculiar character, (like four wheel drive and or differentials).

The unit is of mechanic control of the disk sliding valve of the hydraulic clutch of common input or receipt of motion, but of different exits. That is to say we have two secondary disks or shafts. (155) It is a gear disk of delivery of controlled revolutions. (156) It is a ball bearing for the support of the peripheral secondary disk. (157) It is flange of delivery of a secondary internal disk of controlled revolutions.

However, expect of the points of delivery or receipt of motion indicated here, there exist the possibilities of giving or taking also from other points and not only from the tips of the shafts. As for example with gears from the peripheries of drums of the shafts.

### Figure 17

As the above explained arrangement, but with electromagnetic control of disk sliding valve of clutch.

### Figure 18

As the arrangement of figure 16, but self serviced with its own oil pump.

### Figure 19

It is an automatic box of continuous variable transmission of infinity speed ratio of double gradation with mechanic valve of control of hydraulic overrunning clutch, where in the intermediary disk one more overrunning clutch (90) is placed which neutralizes any axial tolerance that might appear in units of large sizes, because of bending arrow.

### Figure 20

The side view of an automatic box of continuous variable transmission of infinity speed ratio, simple gradation, with mechanic control of hydraulic overrunning clutch where the output is received by belt, also possible to be received by chain. (155) is a common flange with pulley for the delivery of motion. (156) is a belt to receive the controlled revolutions. The remaining elements are as those explained in figure 6.

### Figure 21

It presents another possibility of automatic box of continuous variable transmission of infinity speed ratio, of simple gradation, with mechanic control of operation of valve of hydraulic overrunning clutch and here the primary and secondary disks take a shape of concave frustum cone. In order to achieve and maintain permanent contact of the intermediary disk of overrunning clutch which is a variation of that of figure 4, a resist column driver for it has been placed whose axis is located vertically in to the level of points of contact of the overrunning clutch with the primary and secondary disks. So there is compression of the involved parts in three objects points located at the apexes of isosceles or equilateral triangle.

The shape or the arrangement serves spaces where there is lack of sufficient width. The exists or the power outlet can, as in all the automatic boxes of continuous variable transmission of infinity speed ratio by means of: axes, belts or chains. Here (181) it is control link bar of angle position of intermediary disk of overrunning clutch. (187) is a link - bar of command transfer from the control unit to the final bar (181). (184, 185) are joint pins of bars (181, 187). (183) it is a resister roller, of the maintenance of zero gaps between the involved parts, to guarantee unhindered and continuously controlled transmission of motion. (182) it is a resist column driver of the shape of arc of circle. (186) is a general side view and partial magnification of the intermediary disk of the overrunning clutch. The output is received in any kind. And this arrangement can be provided with all types of handling valves of oil of hydraulic overrunning clutch. This new arrangement can be applied in all the above mentioned applications that is to say: double gradation with all the types of motion-control valves (mechanical or electromagnetic), as well as with its own oil pump. Also it can take the shape of radial arrangement of disks, based on the arrangements described in figures 16, 17, 18.

### Figure 22

Figure 22 presents an arrangement of automatic box of continuous variable transmission of infinity speed ratio, simple gradation, with electromagnetic clutch. Here (188) is the coil of the electromagnet. (189) is the inductor of the electromagnet. (190) is the lubricating oil aperture. (8) is the overrunning clutch of electromagnetic activation, a variation of hydraulic of figure 4. The remaining elements of the arrangement at the numbering position are identical to the arrangement described in figure 6. This arrangement can be applied in all the above mentioned combinations, simple or double gradations, axial or radial provisions.

### Figure 23

Figure 23 is a monolinear figure, 20 arrangements of automatic gear-boxes of continuous variable transmission of infinity speed ratio with disks or intermediate disk of gradations of donut shape classified as follows: a) it is provided with a mechanic control valve of the hydraulic overrunning clutch b) it is equipped with its own lubrication pump for production of pressure control of hydraulic overrunning clutch c) it is equipped with electromagnetic control valve of hydraulic overrunning clutch d) it is equipped with electromagnetic clutch. Layer (1) simple gradation, with supplement / attribution of motion via shafts. Layer (2) simple gradation with supplement via shafts and output via belt or chain. Layer (3) double gradation with supplement / output via shafts. Layer (4) double gradation, with supplement via shafts and output via belt or even chain. Layer (5) double gradation with supplement / attribution of motion via shafts, and addition of additional overrunning clutch, between the half pieces of the intermediary disk of gradation and concerns large sizes of power / torques.

### Figure 24

Figure 24 presents in monolinear figure 8 arrangements of automatic gear-boxes of continuous variable transmission of infinity speed ratio, with disks of gradations of the shape of donut, classified in the same way, as follows: (a) it is equipped with mechanic control valve of hydraulic overrunning clutch (b) it is equipped with its own lubricating pump of pressure production for control, of hydraulic overrunning clutch (c) it is equipped with electromagnetic control valve for the control of hydraulic overrunning clutch (d) it is equipped with electromagnetic overrunning clutch. Layer (1) radial arrangement with common supplement of motion via shaft and different output, via shafts. Layer (2) radial arrangement with common supplement of motion via shafts and different output via belts and or chains.

### Figure 25

Figure 25 presents in monolinear figure 16 arrangements of automatic gear-boxes of continuous variable transmission of infinity speed ratio, with disks or the intermediary disks of gradations of the shape of concave frustum cone disks, classified in the same way as follows: (a) it is equipped with mechanic control valve of hydraulic overrunning clutch (b) it is equipped with its own lubricating pump for pressure production for control of hydraulic overrunning clutch (c) it is equipped with electromagnetic control valve of hydraulic overrunning clutch. (d) it is equipped with electromagnetic clutch. Layer (1) simple gradation with supplement / attribution of motion via shafts. Layer (2) simple gradation with supplement via shafts and output via belt and or chain. Layer (3) double gradation, with supplement / attribution via shafts. Layer (4) double gradation, with supplement via shafts and output via belt and or even chain.

### Figure 26

Figure 26 presents in monolinear figure 8 arrangements of automatic gear-boxes of continuous variable transmission of infinity speed ratio, with disks of gradations of the form of concave frustum cone disks and that of donut, classified as follows : (a) it is equipped with mechanic control valve of hydraulic overrunning clutch (b) it is equipped with its own lubricating pump for production of control pressure of hydraulic overrunning clutch (c) it is equipped with electromagnetic control valve of hydraulic overrunning clutch (d) it is equipped with electromagnetic clutch. Layer (1) radial provision with common supplement of motion via shafts and different output via shafts. Layer (2) radial provision with common supplement of motion via shafts and different output, via belts and/or chains.

### Figure 27

Figure 27 presents in side view a simple arrangement of automatic gear-box of continuous variable transmission of infinity speed ratio, with planetary system of supplement of motion via sprocket or shaft and output, via shaft or gear, or sprocket or overrunning clutch. This application can be used in wind generators, bicycles and motorcycles. (1) is the sprocket supplement of motion. (2) is the planets ring. (3) are the planets (4) is the sun from one side and primary disk from the other. (5) are the shafts of the planets. (6) is the ball bearing. (7) is the main shaft of the system. (8) is the intermediary overrunning clutch disk, with the possibility of turning in angular position wider than the angle of clutching resulting declutching - immobilization and complete control of the unit. (9) is secondary disk of infinity places of speed ratio. (10) is the sprocket of reception or attribution or overrunning clutch if it concerns motion control of bicycles or motor cycles, that can also be replaced with flange (15) or a gear or both or independent, depending on the requirement. (11) is a fork of support and angular control of the intermediary overrunning clutch disk (8). (12) is the key of fixing the sprocket (1). (13 and 14) are the keys of fixing the primary and secondary disk respectively.

## Claims

1. Automatic continuous variable transmission boxes, of infinity speed ratio, equipped with hydraulic, electro hydraulic, or electromagnetic clutch with shapes, or the arrangements of constitution are divided in two big categories. The first category is **characterized by** disks with semi circular groove in their internal area where they take shape of donuts and they play roles of primary and secondary shaft, or supplement and attribution of motion. Between the primary and secondary disk in the space of donuts and in two diametrically opposite points they intersect and connect these disks via contact, as intermediary disks, two overrunning clutches, with special each time form, as those that shown in figures 1 and 5.

2. The second category is **characterized by** primary and secondary disks of shape of concave frustum cone, in their inside area and form between them a space of circular groove, semi - circular cross - section. Between the disks of primary and secondary, in the space of the semi - circular groove and in two points diametrically opposite they interfere and connect these disks via contact, as intermediary disks, two overrunning clutches also of special form, as they appear in point 186 in figure 21 which (overrunning clutch) constitutes a variation of that of figure 4. The permanent and continuous contact of the disks is ensured with the resistance column driver and the link - bars of the driver roller. Thus the distribution of points of support / of resistance at the apex of isosceles or equilateral triangle is achieved and the phenomena of slipping, or losses of motion transmission are avoided.

3. Except of the two main basic categories that concern the way of simple gradation of continuous variable transmission of infinity speed ratio, the gear-boxes are also separated in subclasses, that are **characterized by** the way in which the clutching and declutching with the motive source is achieved or the way that ensures the lubrication and the creation of hydraulic pressure of operation of the hydraulic overrunning clutch. Thus, we have a gear-box with hydraulic clutch which also constitutes a special form of overrunning clutch, as shown in figure 3 and 3a and service with mechanical disk sliding valve of oil control, as shown in figure 6. Another category of gear-box with hydraulic clutch, again with overrunning clutch of the same form and electromagnetic oil control valve, as shown in figure 7. Another category is this where the clutch is electromagnetically activated, as it is shown in figure 22, not needing oil pressure for its activation. All the subclasses that were mentioned before need a separate oil pump for lubrication and creation of pressure for the activation of their hydraulic clutch. Another subclass is provided with its own pump and naturally with the appropriate oil cooler, as this arrangement is shown in figure 8. Another way is the use of air, instead of oil, for the clutch activation, depending on the environment where it functions and the desirable degree of precision therefore there is the pneumatic type of clutch.

4. Other subclasses expect of above mentioned, are **characterized by** the way in which the part or total of gradation of speed of the unit is managed. Thus, the result is: gear-boxes of simple gradation, as those shown in figures 6,7,8,20,21,22. Other subclass is that of double gradation, with the primary and secondary disks placed in line between them axially, the existence of one intermediary between them, which are connected between them with mechanically, activated (other intermediary disks) overrunning clutches. Such appear in figures 12,13,14,19. A third subclass is that of the parallel placement of disks. Here there is a common input of (motion) revolutions but different output. That is to say a parallel service of different needs of speed. Arrangements of this type appear in figures 16,17,18.

5. Other characteristics that can define subclasses are the mechanic elements, of supplement and reception of rotational force. As: via flanges, via gears, via sprocket and chains, via pulleys and belts, as well as with infinite combinations of the above mechanical elements.

6. Also characteristics that constitute subclass are the existence inside the two half pieces of the intermediary disk in a system of double gradation and with large torques and power of one overrunning clutch, which aims to the zeroing of any tolerances that result from bending arrows. This application is shown in figure 19. It is also possible to shape all above mentioned main and secondary categories and subclasses, without the existence of clutch. The intermediary overrunning clutch can undertake and execute the function of the clutch, if it has the possibility of turning more than the minimal speed ratio. Such possibility appears in figure 27.

7. All the above mentioned characterize gear-boxes of continuous variable transmission of infinity speed ratio where basic precondition is the precision of the transported speed with the right parameters and long duration of life, without the need of frequent maintenance works. Of course units can also be manufactured in which there is no interest for the precision of transport, or the frequency of maintenance with cheap materials, as synthetics such as vehicle tyres that will constitute the intermediary disks.

8. All above are feasible with the invention of seven new kinds or special overrunning clutch, which are basic characteristics for the constitution and operation of automatic gear-boxes of continuous variable transmission of infinity speed ratio which with the peculiarity of their manufacture ensure the clutching - declutching of various or different, diametrically opposite points of two different disks, which belong or serve partial departments of a single system of revolutions transmission, by achieving the maintenance of constant revolutions or adjustment of desirable ones within limits as these are described in the revelation of invention.

9. The whole operation of the units is **characterized by** the maintenance of the operation principle of the overrunning clutch that is to say their elasticity as clutches which they exploit and attribute the elasticity when needed providing safety against sudden or violent large changes of load. But during all their other operation behave as couplers, without slipping.
